# EUROPEAN PATENT SPECIFICATION

(11) **EP 2 415 930 B1**
(45) Date of publication and mention of the grant of the patent: **11.02.2015**
(21) Application number: 11176344.7
(22) Date of filing: 02.08.2011
(51) Int. Cl.: D21B 1/32, D21F 1/56, D21F 9/02, D21F 1/02, D21F 1/06

(54) **Pulp feeder for used paper recycling apparatus**
Zellstoffzufuhrvorrichtung für eine Vorrichtung zum Recycling von gebrauchtem Papier
Dispositif d'alimentation de pâte pour appareil de recyclage de papier usé

(30) Priority: 02.08.2010 JP 2010173241
(43) Date of publication of application: 08.02.2012
(73) Proprietor: Seed Co. Ltd., Osaka-shi, Osaka (JP)
(72) Inventor: Tamai, Shigeru, Osaka-shi, Osaka (JP); Koyama, Yuji, Osaka-shi, Osaka (JP)
(74) Representative: Mounteney, Simon James

(56) References cited:
- EP-A1- 1 947 234

## Description

### BACKGROUND OF THE INVENTION

### Field of the Invention

The present invention relates to a used paper recycling apparatus of a small furniture size to be installed at the site of origin of used paper according to the preamble of claim 1, for regenerating and processing the used paper into a reusable paper at the site without disposing and discarding.

EP 1 947 234 A1 discloses a pulp feeder for used paper recyling apparatus, the pulp feeder including an overflow gate provided in a paper making frame body for keeping constant the staying water level of the pulp suspension.

### Description of the Related Art

Used paper occurs everyday and everywhere, including government offices, companies, and general household, such as used and unnecessary documents. Generally, used paper is disposed as refuse, incinerated, or discarded.

On the other hand, from the global trend of effective use of limited resources on earth, various technologies have been developed for regenerating and reusing the used paper discarded so far without disposing or discarding.

These used paper recycling technologies are mostly employed in the paper making industry, and the used paper recycling equipment requires, like an ordinary paper making equipment, a vast land, a tremendous capital investment, and a huge amount of chemicals and water used in paper making, for the purpose of fast and mass production of recycled paper, and enhancement of paper quality.

Used paper recycling requires manual used paper collection works by many people, and involves various problems, such as mixture of foreign matter, defective sorting due to lack of knowledge about used paper recycling, failure in removal of debris, and many others, and if used paper is collected, in order to regenerate the used paper as recycled paper perfectly by 100%, final sorting by specialists and cleaning or screening should be needed. Moreover, used paper includes confidential documents, and due to the confidential problems, such documents are not collected as general garbage, but may be incinerated and discarded, and recycling is not promoted in certain fields.

To solve these problems of used paper recycling, it is effective to develop a technology capable of regenerating and utilizing at the site of origin of the used paper, and from such point of view, the present applicant has developed and proposed various used paper recycling apparatus as disclosed, for example, in Japanese Patent Application Laid-Open No. 2007-308837.

This used paper recycling apparatus relates to a used paper recycling apparatus of a large scale such as used paper recycling plant, realized as an apparatus to be installed indoors in a small shop, a general household, or the like, and the apparatus includes, in an apparatus case of furniture size, a pulp making unit for macerating and beating used paper and manufacturing used paper pulp, a paper making unit for manufacturing recycled paper by making the used paper pulp manufactured in the pulp making unit, and a control unit for driving and controlling the pulp making unit and the paper making unit by interlocking, in which the paper making unit includes a paper making process unit for producing wet paper by making the used paper pulp sent from the pulp making unit, and a drying process unit for produced recycled paper by drying the wet paper made and formed in the paper making process unit, and these two process units are composed in a form of a belt conveyor having a running belt for processing and conveying the used paper pulp.

The used paper is macerated and beaten in the pulp making unit and becomes used paper pulp, and this used paper pulp is conveyed on the running belt of the belt conveyor in the paper making unit, and is processed in the processes of filtering and dewatering, squeezing and dewatering, and heating and drying, and is recycled paper is obtained. In this process, at the stage of pulp, the used paper is decomposed to fiber level, and written or printed characters and diagrams are completely decomposed and lost, and cannot be restored, so that the confidential information or personal information composed in these characters and diagrams are securely prevented from leaking or disclosing outside.

### BRIEF SUMMARY OF THE INVENTION

It is a primary object of the present invention to present a novel pulp feeder of a used paper recycling apparatus further improved from the conventional used paper recycling apparatus.

It is other object of the present invention to present a pulp feeder capable of obtaining a recycled paper of uniform texture, stable in the weight of the wet paper made on an endless mesh belt, in a very narrow used paper processing space of a used paper recycling apparatus of furniture size to be installed indoors in a small shop, a general household, or the like, not limited to a large office or the like, in particular, by improving the configuration of the pulp feeder for supplying pulp on the endless mesh belt running in the paper making process unit, by processing the used paper pulp sent from a proceeding process of pulp making unit, at a start end of the paper making process unit of the paper making unit of the used paper recycling apparatus.

To achieve the object, the used paper recycling apparatus of the present invention exhibits the features defined in claim 1. Further features of the apparatus are defined in the dependent claims.

These and other objects and features of the present invention will be appreciated by reading the detailed description made in conj unction with the accompanying drawings, and novel facts pointed out in the claims thereof.

### BRIEF DESCRIPTION OF THE DRAWINGS

Fig. 1 is a front sectional view showing an overall outline configuration of a used paper recycling apparatus in a preferred embodiment of the present invention.
Fig. 2 is a side sectional view showing an overall outline configuration of the used paper recycling apparatus of the same.
Fig. 3 is a circuit diagram showing a configuration of a used paper pulp circulation route of a beating unit of the used paper recycling apparatus of the same.
Fig. 4 is a block diagram showing a configuration of a pulp concentration adjustment unit of the used paper recycling apparatus of the same.
Fig. 5 is a perspective view showing an overall outline configuration of a paper making unit of the used paper recycling apparatus of the same.
Fig. 6 is a perspective view showing a configuration of a pulp feeding unit in the paper making unit.
Fig. 7 is a plan view showing a configuration of the pulp feeding unit of the same.
Fig. 8 is a sectional view along line VIII-VIII of Fig. 7 showing the configuration of the pulp feeding unit of the same.
Fig. 9 is a plan view showing a sectional view along line IX-IX of Fig. 7 showing the configuration of the pulp feeding unit of the same.
Fig. 10 is a front view showing a configuration of the pulp feeding unit of the same.
Fig. 11 is a perspective view showing an outline configuration of the used paper recycling apparatus.

### DETAILED DESCRIPTION OF THE PREFERRED EMBODIMENT

Preferred embodiments of the present invention are described specifically below while referring to the accompanying drawings. Throughout the drawings, same reference numerals refer to same or similar constituent components or elements.

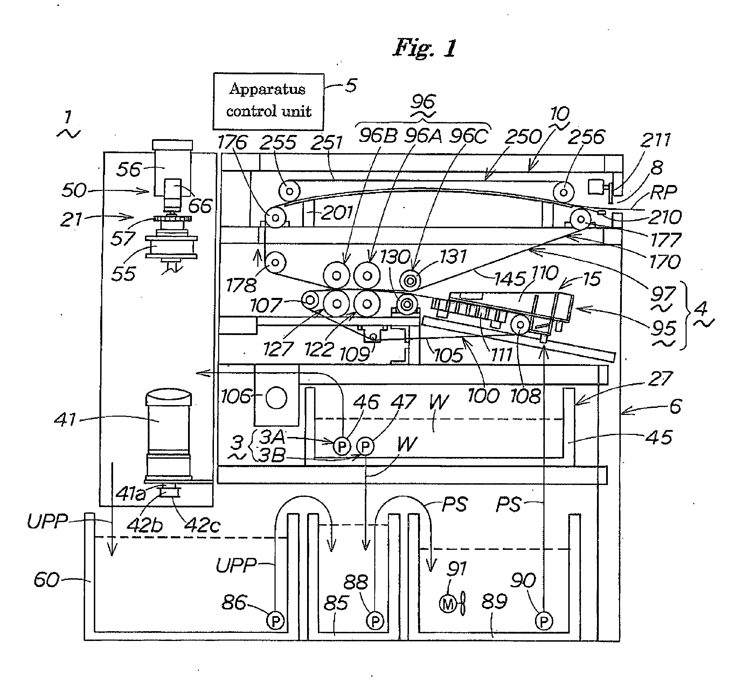

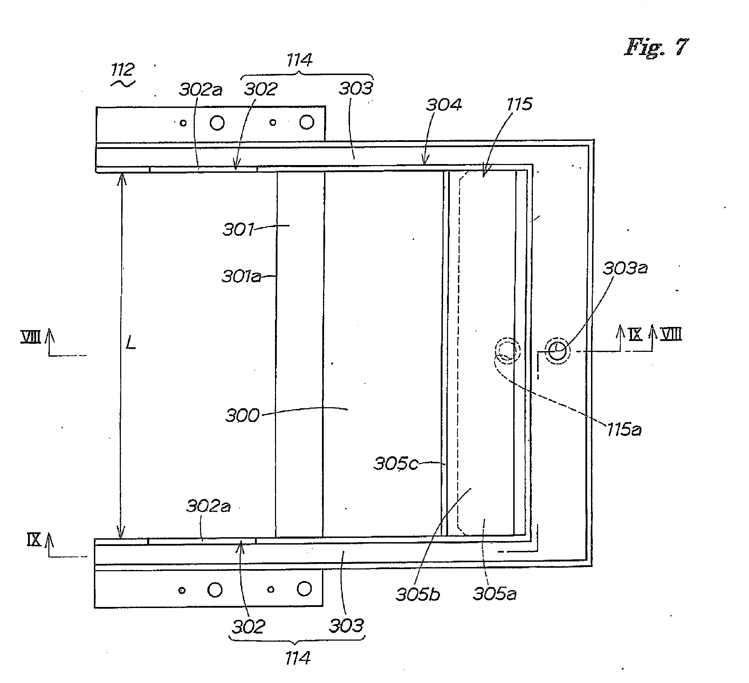

A used paper recycling apparatus of the present invention is shown in Fig. 1 to Fig. 11, and this used paper recycling apparatus 1 is specifically installed at the site of origin of used paper, and is an apparatus for regenerating into a reusable paper at the same site, without disposing or discarding the used paper UP, and the used paper UP includes confidential documents from government offices and general corporate offices, personal letters from general household, and other used and unnecessary documents.

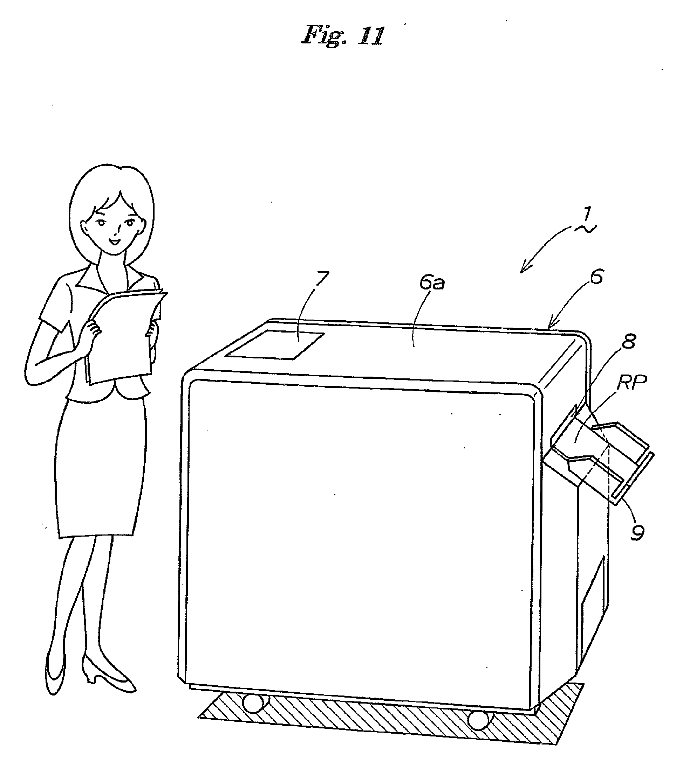

The used paper recycling apparatus 1 is as small as furniture size shown in Fig. 11, that is, small and compact similar to document rack, locker, desk, copier, personal computer, and other equipment installed in an office, and includes, as shown in Fig. 1, main units, specifically a pulp making unit 2, a pulp concentration adjustment unit 3, a paper making unit (paper making device) 4, and a device control unit (control unit) 5, and the paper making unit 4 includes a pulp feeding unit (pulp feeder) 15 which is a feature mechanism of the present invention.

These apparatus components 2 to 5 are compact in design to be incorporated and installed in an apparatus case 6. This apparatus case 6 is a furniture size as mentioned above, and the specific shape and size may be designed appropriately depending on the purpose or application. The apparatus case 6 of the illustrated preferred embodiment is formed like a box of shape and size similar to a copier installed and used in an office, and the top plate of the apparatus case 6 is provided with an inlet port 7 opening and closing for putting in used paper UP, an the side part is provided with an outlet port 8 for discharging recycled paper RP, RP, .... At the lower edge position of this outlet port 8, a recycled paper receiving tray 9 is detachably provided for receiving the recycled paper RP, RP, ... discharged from the outlet port 8.

The pulp making unit 2 is a process unit for manufacturing used paper pulp by macerating and beating the used paper UP, and consists of a macerating unit 20 for agitating, crushing, and macerating the used paper UP, and a beating unit 21 for beating the used paper UP macerated in this macerating unit 20.

The macerating unit 20 is a process unit for agitating, crushing, and macerating the used paper UP, and mainly consists of a macerating tank 25, an agitating device 26, and a water feed device 27.

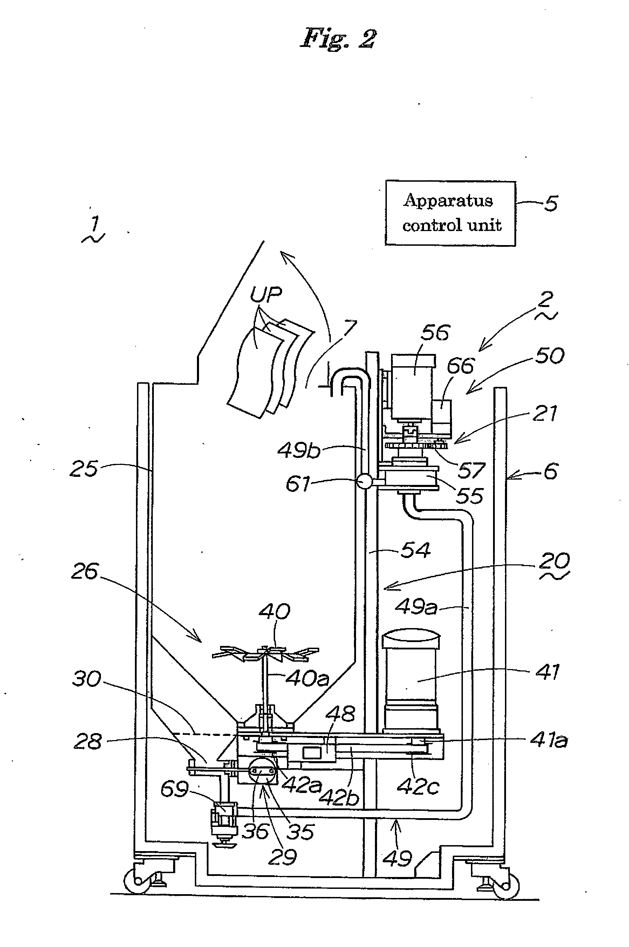

The macerating tank 25 is, as shown in Fig. 2, provided with the inlet port 7 for feeding and supplying the used paper UP in its ceiling wall, and its bottom wall is provided with a discharge port 28 for discharging the macerated used paper pulp UPP to the downstream side. The inner volume of the macerating tank 25 is set depending on the number of used paper UP to be agitated and processed in batch. In the illustrated preferred embodiment, the macerating tank 25 has a capacity of agitating and processing (in batch process) about 500 sheets (about 2000 g) of used paper UP of A4 format PPC (plain paper copier) by adding about 98 liters of water. In this case, the concentration of the used paper pulp UPP to be macerated is about 2%. This concentration adjustment is conducted by water supplied from the water feed device 27, and this water feed device 27 forms a part of the pulp concentration adjustment unit as described below.

The inlet port 7 is designed to be opened and closed with respect to the outside of the case cover 6a as apparatus case 6. The discharge port 28 is opened and closed by a switch valve 29, and is connected to a used paper circulation route 49 mentioned below. The position of the discharge port 28 is provided with a debris filter 30 for removing debris harmful for the subsequent process of the beating process, such as clips, staples, and others binding the used paper UP, UP, ....

The switch valve 29 is opened and closed specifically by crank motion of a crank mechanism 36 by a driving motor 35. The driving motor 35 is specifically an electric motor, and this driving motor 35 is electrically connected to the device control unit 5.

An agitating device 26 is provided inside of the macerating tank 25, and includes an agitating impeller 40 and a driving motor 41.

The agitating impeller 40 has its rotation shaft 40a rotatably supported in an upright position in the bottom center of the macerating tank 25, and the lower end of the rotation shaft 40a is driven and coupled to a rotation shaft 41a of the driving motor 41 by way of transmission means 42 composed of a transmission pulley 42a, a transmission belt 42b, and a transmission pulley 42c.

The water feed device 27 is to supply water W into the macerating tank 25, and composes a beating concentration adjustment unit 3A of the pulp concentration adjustment unit 3 as described below.

The water feed device 27 of the illustrated preferred embodiment includes, as shown in Fig. 1, a white water collection tank 45, a water feed pump 46 for beating concentration adjustment, and a water feed pump 47 for paper making concentration adjustment. The white water collection tank 45 is, as described below, designed to collect white water W filtered and dewatered in the paper making unit 4 (that is, pulp water of ultra-low concentration filtered by the paper making mesh in the paper making process), and the white water W collected in the white water collection tank 45 is supplied into the macerating tank 25 through the water feed pump 46, and into a concentration adjustment tank 85 through the water feed pump 47 mentioned below.

In this relation, in the bottom of the macerating tank 25, a weight sensor 48 is provided, and the used paper UP, UP, ... and the amount of water processed in batch in the macerating tank 25 are weighed and controlled, and the weight sensor 48 is electrically connected to the device control unit 5.

The weight sensor 48 of the illustrated preferred embodiment is composed of a load cell, and is designed to sense and measure the total weight of the used paper UP, UP, ... and the water charged and supplied in the macerating tank 25.

In a specific control configuration of the macerating unit 20, first the operator opens the inlet port 7, and charges used paper UP, UP, ... into the macerating tank 25, and its weight is sensed and measured by the weight sensor 48, and when reaching the specified weight (number of sheets), it is noticed to the operator by sound and/or display. Corresponding to this display, the operator closes the inlet port 7, and the water feed device 27 is driven, and the feed water pump 46 supplies the water W in the white water collection tank 45 into the macerating tank 25 by the amount corresponding to the charged weight (number of sheets) of the used paper UP, UP, ....

When the operator closes the inlet port 7 after feeding an arbitrary amount (smaller than the specified weight (number of sheets)) of used paper UP, UP, ... into the macerating tank 25 from the inlet port 7, the weight is sensed and measured by the weight sensor 48, and the water feed device 27 is driven, and a proper amount of water W corresponding to the result of measurement is supplied into the macerating tank 25 from the white water collection tank 45.

In the illustrated preferred embodiment, as mentioned above, when a maximum of about 500 sheets (about 2000 g) of A4 format PPC used paper UP is charged into the macerating tank 25, at this moment, it is noticed to the operator by sound and/or display, and by the closing action of the inlet port 7, about 98 liters of water is supplied from the water feed device 27, or when an arbitrary amount (smaller than the specified weight (number of sheets)) of used paper UP, UP, ... is supplied, a proper amount of water corresponding to the supplied amount of the used paper is added from the water feed device 27, and the concentration of the used paper pulp UPP to be macerated is controlled and adjusted to be about 2%.

In the agitating device 26, the used paper UP, UP, ... charged into the macerating tank 25 from the supply opening of the apparatus case 6, that is, the inlet port 7, are operated by normal and reverse rotation of the agitating impeller 40 by the driving motor 41, and agitated and mixed for a specified time (10 to 20 minutes in the illustrated preferred embodiment) in the water supplied from the water feed device 27, so that the used paper UP, UP, ... are macerated and beaten, and used paper pulp UPP is obtained.

The discharge port 28 of the macerating tank 25 is closed by the switch valve 29 during operation of the macerating unit 20, and flow of used paper UP or used paper pulp UPP from the macerating tank 25 into the used paper pulp circulation route 49 is prevented, and the discharge port 28 is opened by the switch valve 49 during operation of the beating unit 21 described below, and the flow of used paper pulp UPP from the macerating tank 25 into the used paper pulp circulation route 49 and the circulation flow are allowed.

The beating unit 21 is a process unit for beating the used paper UP macerated in the macerating unit 20, and specifically the used paper UP macerated in the macerating unit 20 is pressurized and beaten, and the inks for forming characters and patterns on the used paper UP (printing ink forming characters and patterns on the used paper UP by various printing technologies, characters and patterns formed on the used paper UP by pencil, ball-point pen, fountain pen, or the like, and other inks) are ground and pulverized (to be micro-fibers).

The beating unit 21 has a grinder 50 as a principal component. This grinder 50 mainly includes a pair of beating disks 51, 52 rotated and driven relatively, and the pair of beating disks 51, 52 are disposed oppositely and concentrically across a tiny beating gap G between beating action faces 51a, 52a.

The beating gap G of the beating action faces 51a, 52a of the grinder 50 is set to be narrower gradually from the grinder 50 for initial period to the grinder 50 for terminal period of the beating process, as described below.

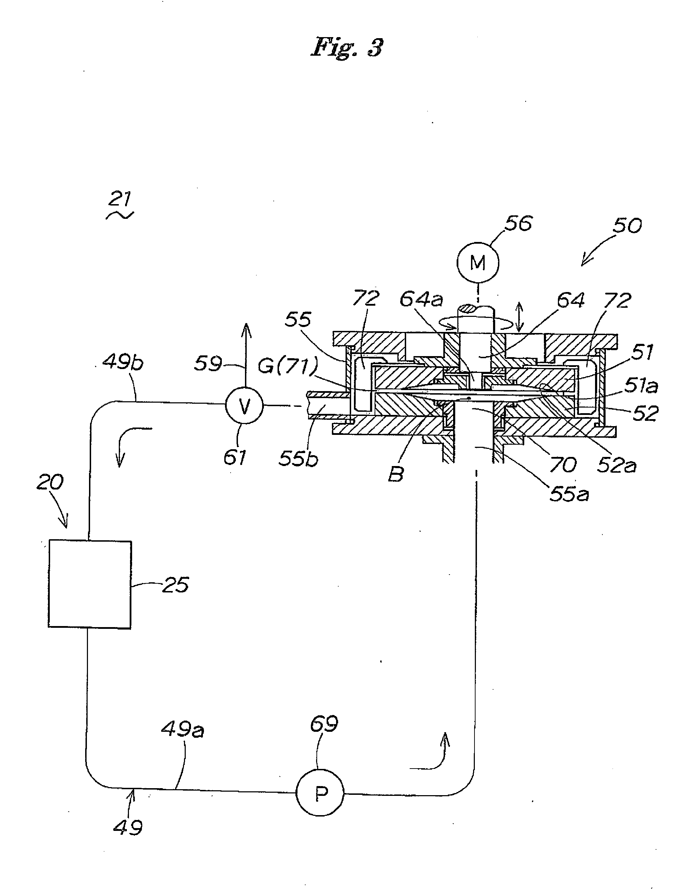

In the beating unit 21 of the present preferred embodiment, as shown in Fig. 3, the used paper pulp circulation route 49 comprising one grinder 50 is formed, and the used paper UP is beaten and processed while being circulated for a specified time by way of the grinder 50 in a circulation system.

By the execution of the beating process by the used paper pulp circulation route 49, in spite of a very small and narrow process space of the apparatus case 6 of furniture size, a used paper pulp beating process route of limitless length basically not limited in length, a beating process space practically equal to the beating process in a large-scale plant can be assured, and an optimum beating effect can be obtained depending on the purpose.

In relation to one grinder 50 for executing the beating process throughout the whole process of the beating process, this one grinder 50 plays the function of a plurality of grinders from the grinder for initial period to the grinder for terminal period of the beating process. Specifically, the beating gap G of the beating action faces 51a, 52a of this grinder 50 is controlled and adjusted to be narrower gradually from the initial period to the terminal period of the beating process.

The grinder 50 of the illustrated preferred embodiment as shown in Fig. 2 is installed adjacently to the macerating tank 25 of the macerating unit 20, in an apparatus machine body 54 for composing the apparatus case 6, and as shown in Fig. 3, it includes a beating tank 55 communicating with the macerating tank 25 of the macerating unit 20, the pair of beating disks 51, 52 rotatably provided relatively in this beating tank 55, a rotation drive source 56 for rotating the pair of beating disks 51, 52 relatively, and gap adjusting means 57 for adjusting the beating gap G of the pair of beating disks 51, 52.

The beating tank 55 is formed in a closed cylindrical shape capable of accommodating the pair of beating disks 51, 52, and has a supply port 55a for supplying the used paper pulp UPP from the upstream side, and a discharge port 55b for discharging the beaten used paper pulp UPP to the downstream side.

Specifically, the supply port 55a is opened toward the vertical direction in the center of the bottom of the beating tank 55, and the discharge port 55b opened toward the horizontal direction at the cylindrical side of the beating tank 55. The supply port 55a and the discharge port 55b are connected, as shown in Fig. 3, to communicate with the macerating tank 25 of the macerating unit 20, respectively by way of circulation pipings 49a, 49b, and the discharge port 55b further communicates with a used paper pulp collection tank 60 by way of a discharge piping 59.

Reference numeral 61 is a direction changeover valve, and by the switching action of this direction changeover valve 61, the used paper pulp UPP discharged from the discharge port 55b is selectively returned to the macerating tank 25, or collected in the used paper pulp collection tank 60. The direction changeover valve 61 is specifically an electromagnetic valve, and it is electrically connected to the device control unit 5.

One of the pair of beating disks 51, 52 is a fixed side beating disk fixed and provided in the rotating direction, and the other is a rotating side beating disk capable of rotating. In the illustrated preferred embodiment, the upper side beating disk 51 is the rotating side, and the lower side beating disk 52 is the fixed side, and with respect to the lower side fixed side beating disk 52, the upper side rotating side beating disk 51 is disposed oppositely concentrically and rotatably across a tiny beating gap G. This rotating side beating disk 51 is coupled and driven to a driving motor 56 by way of a rotation main shaft 64 supported rotatably at the fixed side of the apparatus machine body 54 and movably in the axial direction.

The rotation main shaft 64 is rotatably supported on an elevating member of the gap adjusting means 57 although not shown specifically, and the rotating side beating disk 51 is fitted to its leading end concentrically and integrally, and its base end part is driven and coupled to the rotation shaft of the driving motor 56 integrally in the rotating direction, and relatively movably in the axial direction.

The driving motor 56 is a rotation drive source, and it relatively rotates the pair of beating disks 51, 52, and an electric motor is used specifically, and this driving motor 56 as the drive source is electrically connected to the device control unit 5.

Opposite faces 51a, 52a of the both beating disks 51, 52 forming the tiny beating gap G cooperate with each other, and form beating action faces. These opposite beating action faces 51a, 52a are grinding wheel surfaces formed of multiple abrasive grains bonded by a bonding material. The both beating action faces 51a, 52a are formed in a taper shape, as shown in Fig. 3, so that the diameter dimension may be larger continuously in the mutually opposite directions, and the outermost peripheral edges are mutually parallel annular flat surfaces, and these annular flat surfaces form the beating gap G.

In other words, in the pair of beating disks 51, 52, at the central position of the beating action face 52a of the fixed side beating disk 52, an inlet 70 is formed so as to communicate coaxially with the supply port 55a of the beating tank, and two annular flat surfaces formed on the outer peripheral edges of the beating action faces 51a, 52a of the pair of beating disks 51, 52 communicate with the discharge port 55b of the beating tank 55, and form a outlet 71 having the beating gap G.

On the outer circumference of the rotating side beating disk 51, a plurality of blades 72, 72, ...are provided at specified intervals in the circumferential direction, and these blades 72, 72, ... are rotated by the rotating side beating disk 51, and the used paper pulp UPP discharged from the outlet 71 is forced out by pumping action toward the discharge port 55b of the beating tank 55 by a centrifugal force.

In this way, by the driving motor 56 as the drive source, when the rotating side beating disk 51 is rotated and driven with respect to the fixed side beating disk 52, the used paper pulp UPP supplied in the beating space B from the macerating tank 25 of the macerating unit 20 by way of the supply port 55a and the inlet 70 of the beating tank 55 flows into the beating space B from the inlet 70, and passes through this beating space B, and is pressurized and beaten by the relatively rotating beating action faces 51a, 52a, and the inks forming characters and patterns on the used paper UP are ground and pulverized, and the used paper UP is discharged through the discharge port 55b of the beating tank 55 from the outlet 71.

When being discharged from the outlet 71, the used paper pulp UPP further receives the pressurizing and beating actions at the location of the outlet 71 having the beating gap G, and is pulverized to a micron size (to be micro fibers) specified by the beating gap G.

In this regard, in the present preferred embodiment, as mentioned above, since the used paper pulp circulation route 49 is provided with the circulation beating process (see Fig. 3) having one grinder 50, that is , the one grinder 50 functions as a plurality of grinders from the grinder for initial period to the grinder for terminal period of the beating process, and the beating gap G of this grinder 50 is controlled and adjusted so as to be gradually narrower from the initial period to the terminal period of the beating process by the gap adjusting means 57.

The gap adjusting means 57 is composed to control and adjust the beating gap G of the beating disks 51, 52, although not shown specifically, by moving the pair of beating disks 51, 52 relatively in the rotation axial direction, and is mainly composed of moving means (not shown) for moving the rotating side beating disk 51 in the rotation axial direction, that is, in the axial direction of the rotation main shaft 64, and a drive source 66 for driving this moving means. The drive source is specifically an electric motor, and this driving motor 66 is electrically connected to the apparatus control unit 5.

By rotation of this electric motor 66, the rotation main shaft 64 is moved up and down by way of the moving means, and the rotating side beating disk 51 integral with the rotation main shaft 64 is moved in the vertical direction to the fixed side beating disk 52, that is, in the rotation axial direction, and the beating gap G of the both beating disks 51, 52 is controlled and adjusted.

For this purpose, a position detection sensor (not shown) is provided for detecting the elevating position of the rotating side beating disk 51, and by the detection result of the position detection sensor, the driving motor 66 is controlled and driven. The position detection sensor is electrically connected to the device control unit 5.

The beating gap G of the beating disks 51, 52 by the gap adjusting means 57 is controlled and adjusted in mutual cooperation with a circulation pump 69 as circulation means, in the circulation beating process in the used paper pulp circulation route 49 shown in Fig. 3.

That is, in Fig. 3, the used paper pulp UPP macerated and processed in the macerating unit 20 is circulated in the used paper circulation route 49 by means of the circulation pump 69, and the beating process is executed by the grinder 50, and at this time the beating gap G of the beating action faces 51a, 52a of the grinder 50 is adjusted to be narrower gradually from the initial period to the terminal period of the beating process by the gap adjusting means 57.

In this manner, one grinder 50 is disposed in the used paper pulp circulation route 49, and the beating gap G of this grinder 50 is controlled and adjusted to be narrower gradually from the initial period to the terminal period of the beating process in the circulation system, and therefore in a very narrow process space of furniture size, the used paper pulp UPP is repeatedly and sequentially processed by the pressurizing and beating action and the ink grinding and pulverizing action by the beating action faces 51a, 52a of grinder 50 becoming gradually narrower in the beating gap G, and further the beating and the ink grinding and pulverizing actions are executed uniformly on the entire used paper pulp UPP circulating in the used paper pulp circulation route 49. As a result, an optimum paper tenacity is obtained for the recycled paper RP made and regenerated in the paper making unit 4 described below, and the recycled paper RP of high degree of whiteness (equal to de-inked quality) will be obtained.

The used paper pulp circulation route 49 includes the macerating tank 25 of the macerating unit 20, and in this relation, in the beating process, the agitating device 26 of the macerating unit 20 is driven and controlled, and the macerating unit 20 and the beating unit 21 are drived at the same time. That is, in the circulation type beating process, while the used paper pulp UPP flows out from the macerating tank 25 into the used paper pulp circulation route 49, the used paper pulp UPP after beaten by the grinder 50 flows into the macerating tank 25, and therefore in the macerating tank 25, the used paper pulp UPP different in the beating degree is mixed, and by the agitating action by the agitating device 26, the beating degree of the used paper pulp UPP in the macerating tank 25 is made uniform, and the beating process is promoted.

The used paper pulp collection tank 60 is a location for collecting the used paper pulp UPP beaten and pulverized to a specified size by the beating unit 21, and the used paper pulp UPP collected herein is sent into the pulp concentration adjustment unit 3 to be processed into a pulp suspension PS mixed and adjusted to a paper making concentration corresponding to the finished paper quality of the recycled paper RP to be regenerated before being sent into the paper making unit 4 of the next process of paper making process.

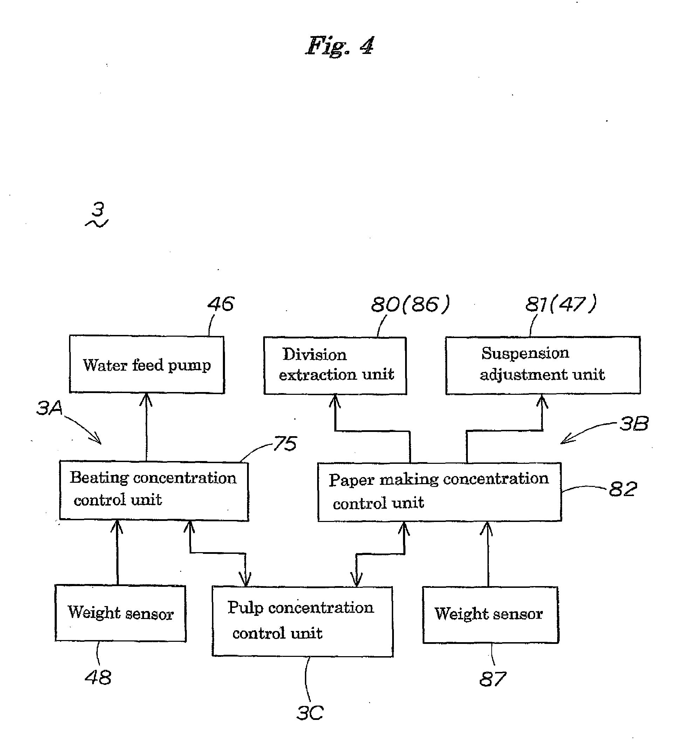

The pulp concentration adjustment unit 3 is a weight type device for adjusting the mixing rate of the used paper UP and the water W to be charged into the apparatus, and adjusting the concentration of the used paper pulp UPP to be supplied in the paper making unit 4, and specifically as shown in Fig. 4, it includes a beating concentration adjustment unit 3A, a paper making concentration adjustment unit 3B, and a pulp concentration control unit 3C,

The beating concentration adjustment unit 3A is intended to adjust the beating concentration of the used paper pulp UPP in the pulp making unit 2, corresponding to the beating efficiency by the beating unit 21, and mainly includes the water feed pump 46 for beating concentration adjustment of the water feed device 27, as mentioned above, and a beating concentration control unit 75.

The supply amount of white water W by the water feed pump 46 of the beating concentration adjustment unit 3A is preferably set so that the beating concentration of the used paper pulp UPP macerated and beaten by the agitating device 26 may be the maximum concentration allowable for the beating capacity of the grinder 50 of the beating unit 21 for executing the next process of beating process, and in the illustrated preferred embodiment, it is set to be a beating concentration of about 2% as mentioned above.

The beating concentration control unit 75 drives and controls, as mentioned above, the water feed pump 46 so as to supply a necessary amount of water W into the macerating tank 25, depending on the measurement result from the weight sensor 48. This beating concentration control unit 75 forms a part of the device control unit 5 as described below.

The paper making concentration adjustment unit 3B is for adjusting the paper making concentration of the used paper pulp UPP in the paper making unit 4 to an appropriate concentration corresponding to the finished paper quality of the recycled paper RP for regenerating, and is specifically designed to adj ust the concentration of the used paper pulp UPP manufactured in the pulp making unit 2 in division type, and it mainly includes a division extraction unit 80, a suspension adjustment unit 81, and a paper making concentration control unit 82.

The division extraction unit 80 is for dividing and extracting a specified small amount from the whole volume of the used paper pulp UPP manufactured in the pulp making unit 2 in the proceeding process, and includes a used paper pulp supply pump 86 for division extraction for extracting the used paper pulp UPP of the used paper pulp collection tank 60 and sending into a concentration adjustment tank 85.

The suspension adjustment unit 81 is for preparing the pulp suspension PS of a specified concentration by adding a specified amount of water W for concentration adjustment to a specified small amount of used paper pulp UPP divided and extracted by the division extraction unit 80, and mainly includes the water feed pump 47 of the water feed device 27 as mentioned above.

Specifically, although not shown in the drawing, in the bottom of the concentration adjustment tank 85, same as in the macerating tank 25 stated above, a weight sensor 87 formed of a load cell is provided, and it is designed to measure and control the amount of used paper pulp UPP and water W for concentration adjustment supplied into the concentration adjustment tank 85, and the weight sensor 87 is connected electrically to the device control unit 5.

The paper making concentration control unit 82 is for controlling by interlocking the division extraction unit 80 and the suspension adjustment unit 81, and forms a part of the device control unit 5, and interlocks and controls pumps 86, 47 of the division extraction unit 80 and the suspension adjustment unit 81 so as to execute the paper making concentration adjustment process as described below.

First of all, from the whole volume of used paper pulp UPP collected in the used paper pulp collection tank 60 from the beating unit 21 (in the illustrated preferred embodiment, about 2000 g of used paper UP + 100 liters of water W), a specified portion (1 liter in the illustrated preferred embodiment) of used paper pulp UPP is divided by the used paper pulp feed pump 86, and is transferred and contained in the concentration adjustment tank 85. As a result, the weight is sensed and measured by the weight sensor 87, and the result is transmitted to the device control unit 5.

In succession, corresponding to the specified portion of the divided used paper pulp UPP, the water feed pump 47 supplies a specified amount of water W for dilution into the concentration adjustment tank 85 from the white water collection tank 45 (9 liters in the illustrated preferred embodiment (actually as measured by the weight sensor 87)).

In consequence, in the concentration adjustment tank 85, the used paper pulp UPP of beating concentration (2% in the illustrated preferred embodiment) and the water W are mixed and diluted, and pulp suspension PS of specified concentration (in the illustrated preferred embodiment, about 0.2% concentration (target concentration)) is prepared.

Meanwhile, the target concentration of the pulp suspension PS to be prepared is set in consideration of the paper making capacity in the paper making unit 4 as described below on the basis of the preliminary experiment, and it is set at about 0.2% as mentioned above in the case of the illustrated preferred embodiment.

In this manner, the pulp suspension PS adjusted to the target concentration of paper making concentration (0.2%) in the concentration adjustment tank 85 is transferred and supplied into a pulp supply tank 89 from the concentration adjustment tank 85 by way of a first suspension supply pump 88, and is temporarily stored in wait for the next process of the paper making unit 4. Hereinafter, this paper making concentration adjustment process is repeatedly executed similarly for the whole amount of the used paper pulp UPP in the used paper pulp collection tank 60. In the pulp supply tank 89, a second suspension supply pump 90 is provided for sending the pulp suspension PS to a paper making belt conveyor unit 95 of the paper making unit 4.

An agitating device 91 is provided in the pulp supply tank 89, and by the agitating action of this agitating device 87 (91?), the entire paper making concentration of the temporarily stored pulp suspension PS is maintained uniformly at a specific value.

Thus, since the concentration adjustment by the paper making concentration adjustment unit 3 is not executed in batch of whole volume, but in small divided portions or dispensed portions, not only the water consumption is saved substantially, but also the shape and size of the concentration adjustment tank 85 can be reduced substantially, and the entire structure of the used paper recycling apparatus 1 is realized in a compact design.

The pulp concentration control unit 3C is to drive and control the beating concentration adjustment unit 3A and the paper making concentration adjustment unit 3B in cooperation, and specifically by receiving the pulp concentration control information (the charged amount of used paper UP, water supply amount to the macerating tank 25, beating concentration of used paper pulp UPP, and others) from the beating concentration control unit 75 of the beating concentration adjustment unit 3A, depending on this control information, the paper making concentration control information (the target paper making concentration of the used paper pulp UPP, the division extraction amount of the used paper pulp UPP from the used paper pulp collection tank 60, the water supply amount to the concentration adjustment tank 85, and others) for controlling the concentration of the used paper pulp UPP manufactured in the pulp making unit 2 to the target value (paper making concentration) is sent to the paper making concentration control unit 82 of the paper making concentration adjustment unit 3B, so that the paper making concentration adjustment process mentioned above can be executed.

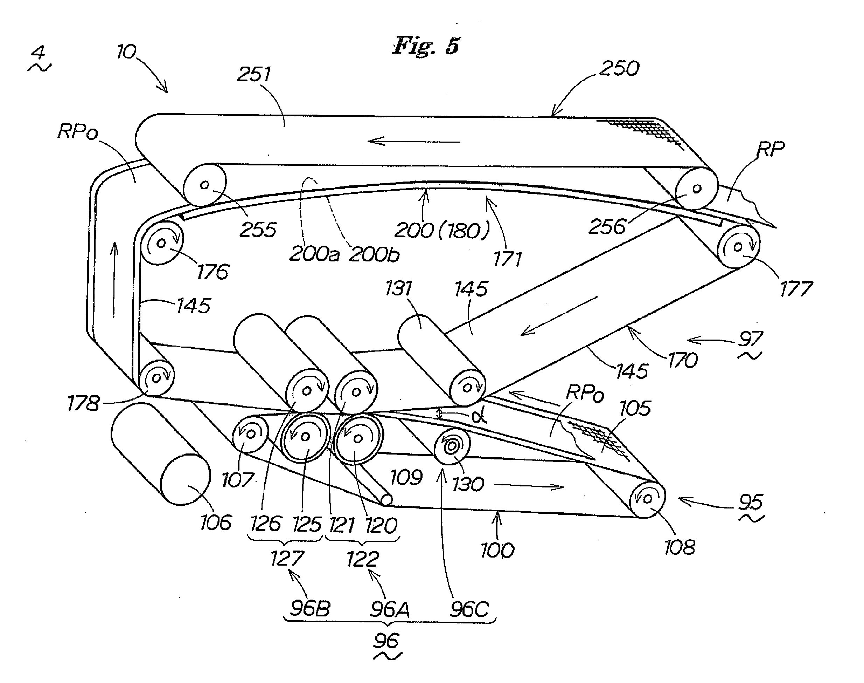

The paper making unit 4 is a process unit for manufacturing recycled paper RP by making from the used paper pulp UPP manufactured in the proceeding process of the pulp making unit 2, and as shown in Fig. 1 and Fig. 5, it mainly includes a paper making belt conveyor unit (paper making process unit) 95, a dewatering roll unit 96, and a drying belt conveyor unit 97, and the paper making belt conveyor unit 95 is provided with a pulp feeding unit (pulp feeder) 15 which is a feature mechanism of the present invention as mentioned above.

The paper making belt conveyor unit 95 is a location functioning as the paper making process unit for manufacturing wet paper by making from a slurry-like pulp suspension mixing the water W and used paper pulp UPP sent from a pulp feeding tank 89 in the pulp manufacturing unit 2, and mainly includes a paper making net conveyor (paper making conveyor) 100, and the pulp feeding unit 15.

The paper making net conveyor 100 is for conveying the pulp suspension while making paper, and has a mesh belt 105 of paper making mesh structure composed of numerous mesh cells for filtering and dewatering the pulp suspension PS disposed to run straightly toward its running direction.

Specifically, the paper making net conveyor 100 includes the mesh belt (endless mesh belt) 105 formed as an endless belt conveying and running while making paper from the pulp suspension PS, and a drive motor 106 for driving this mesh belt 105.

The plate material of the paper making mesh structure for composing the mesh belt 105 is a material capable of filtering and dewatering the pulp suspension PS appropriately through numerous mesh cells of the paper making mesh structure, and preferable examples are polypropylene (PP), polyethylene terephthalate (PET), polyamide (PA) (generally known as Nylon, a registered trademark), stainless steel (SUS), and other corrosion resistant materials, and in the illustrated preferred embodiment, a PET mesh belt 105 excellent in heat resistance is used.

The paper making mesh structure for composing the mesh belt 105 is preferably fine in mesh size, and fine and smooth in weaving mesh, and may be specifically selected depending on the characteristic of the desired paper, and for example, the following points are taken into consideration.
(1) Mesh size of mesh belt 105
   The mesh size of the mesh belt 105 is preferably set at 25 mesh cells to 80 mesh cells, and in the illustrated preferred embodiment, the mesh belt 105 of 50 mesh cells is used.
(2) Wire diameter of mesh of mesh belt 105
   The mesh of the mesh belt 105 is determined not only by the number of mesh cells (size), but also by the wire diameter of the mesh. If the number of mesh cells is the same, the mesh size is smaller when the wire diameter is larger, or larger when the diameter is smaller, and this relation is expressed by the porosity of mesh, or the ventilation degree of airiness (cm³/cm²/sec).

For example, when the mesh is fine and the ventilation is poor, the water filtering rate is low, and the shape and dimension of the pulp supply unit 101 described below may be longer in the running direction of the mesh belt 105, and the apparatus is increased in size. To the contrary, when the mesh is coarse and the ventilation is good, the pulp supply unit 101 is short and the apparatus is small, but the paper quality of the recycled paper RP is coarse, and the difference of smoothness of the face and back sides is larger, and the paper is poor in smoothness.

Considering these conditions comprehensively, the mesh belt 105 is desired to be small in the wire diameter of mesh, large in the number of mesh cells, and reticular in structure not lowering in the degree of ventilation, in order to prevent the used paper pulp UPP from slipping out of the mesh cells of the mesh belt 105 in the paper making process, and the mesh belt 105 in the illustrated preferred embodiment is a plain-woven PET mesh belt 105 of 50 mesh cells. By using this mesh belt 105, it has been experimentally proved that a favorable paper quality suited to writing is obtained.

The width dimension of the mesh belt 105 is set at a specified width dimension slightly larger than the width dimension of the recycled paper RP to be manufactured by making from the pulp suspension PS.

The mesh belt 105 is supported and suspended so as to be rotatable by way of a drive roller 107, a dewatering roll unit 96, a driven roller 108, and a support roller 109 as shown in Fig. 1 and Fig. 5, and it is driven and coupled to the drive motor 106 by way of the drive roller 107.

The paper making process length in the mesh belt 105 is set in a range of the upper side running direction length of the mesh belt 105 in the apparatus case 6 of furniture size (in the shown case, the lateral direction length from the pulp supply unit 101 to the dewatering roll unit 96 in Fig. 1).

The running speed of the mesh belt 105 is set in consideration of the various conditions in the paper making process, and it is preferably set at 0.1 m/min to 1m/min, and in the illustrated preferred embodiment, it is set at 0.2m/min. Incidentally, in the conventional used paper recycling plant of a large scale, the running speed of the paper making belt of this type was set at least at more than 100 m/min, or more than 1000 m/min in a faster version.

The mesh belt 105 disposed so as to run upward obliquely and straightly toward its running direction as shown in Fig. 1 and Fig. 5, and the paper making process length is extended considerably in a limited space of installation, and the filtering and dewatering efficiency is enhanced in relation to the paper making mesh structure of the mesh belt 105.

The drive motor 106 for driving the mesh belt 105 is specifically an electric motor, and is electrically connected to the device control unit 5. This drive motor 106 is also used as the drive source of the dewatering roll unit 96 and the drying belt conveyor unit 97 described below.

The pulp feeding unit (pulp feeder) 15 is a location for supplying the pulp suspension PS on the mesh belt 105 from the pulp making unit 2, and is disposed at the paper making process start end position of the paper making net conveyor 100, and from this pulp feeding unit 15, the pulp suspension PS is uniformly dispersed and supplied on the upper side of the mesh belt 105.

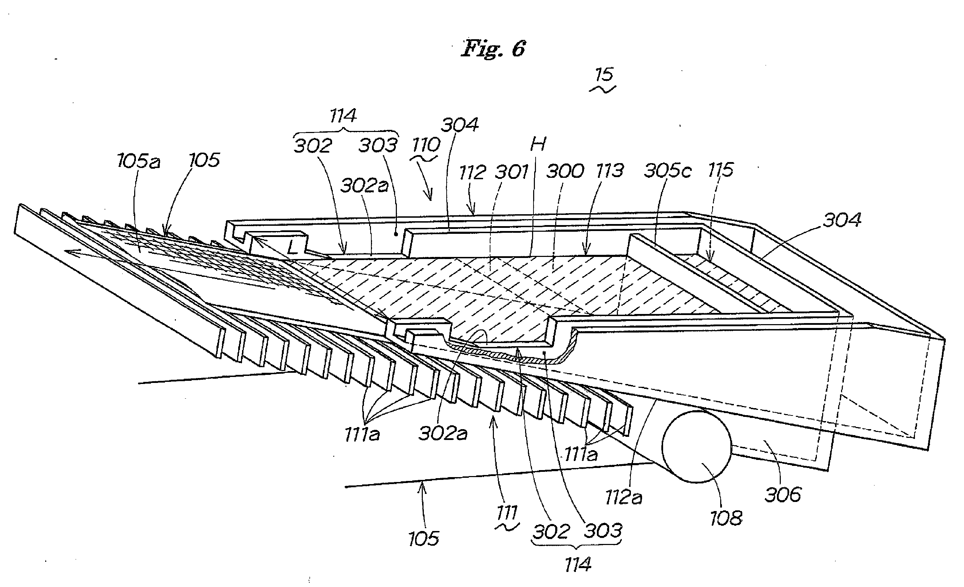

A specific structure of the pulp feeding unit 15 shown in the drawing is shown in Fig. 6 to Fig. 10. That is, in this pulp feeding unit 15, the mesh belt 105 is disposed upward and obliquely toward the running direction as described above, and a paper making frame body 110 and a partition member 111 are disposed at the upper and lower positions of this mesh belt 105.

The paper making frame body 110 is disposed slidably on the upper side of the mesh belt 105, and is to define the supply width L of the pulp suspension PS sent from the pulp making unit 2 onto the upper side of the mesh belt 105, and mainly includes a main body frame 112, a retention unit 113, an overflow unit (overflow means) 114, and a flow passage 115.

The main body frame 112 is formed in flat U-shape opened at the leading end part, that is, the running direction side end part of the mesh belt 105, and its lower end side 112a is disposed to slide and contact with the upper side 105a of the mesh belt 105 running obliquely, and the frame inside width dimension of the main body frame 112, that is, the frame inside width dimension L of the paper making frame body 110 is set corresponding to the width dimension of the recycled paper RP to be manufactured, and the supply width L of the pulp suspension PS on the upper side 105a of the mesh belt 105 is defined (see Fig. 6, Fig. 7, and Fig. 10).

The retention unit 113 is a location for retaining the slurry-like pulp suspension PS mixing the water W and used paper pulp UPP sent from the pulp making unit 2, and is specifically disposed in a form of covering the mesh of the mesh belt 105 by a flat plate member 300 in a closed state from the upper side, in the bottom of the main body frame 112, and the bottom part of the retention unit 113 is formed by this flat plate member 300 and the running mesh belt 105.

In this relation, the leading edge of the flat plate member 300 is provided with a thin guide sheet 301 for assuring a smooth flow of the pulp suspension PS to the mesh belt 105.

The overflow unit (overflow means) 114 is for keeping constant the water level of the pulp suspension PS retained in the retention unit 113, and is provided at the leading position of the paper making frame body 110.

This overflow unit 114 specifically includes an overflow gate 302 and a collection route 303 as principal component, and in the illustrated preferred embodiment, they are provided at both sides of the retention unit 113 respectively.

The overflow gate 302 is provided at an inner wall 304 for composing both walls of the retention unit 113 at the leading end position of the main body frame 112, and causes the pulp suspension PS to overflow when the water level H of the pulp suspension PS retained in the retention unit 113 exceeds a specified level. The inner wall 304 forms the retention unit 113 together with the flat plate member 300 forming the bottom part and the running mesh belt 105 mentioned above.

An upper edge 302a of the overflow gate 302 is set to be horizontal and straight in a state of the paper making frame body 110 disposed on the mesh belt 105. The height position of the upper edge 302a of this overflow gate 302 is set corresponding to various conditions of the mesh belt 105 as mentioned above, so as to maintain the weight of the wet paper RP₀ made on the mesh belt 105 and the recycled paper RP stably at a desired value.

That is, in order to stably maintain the weight of the wet paper RP₀ made on the mesh belt 105, the retention action of the pulp suspension PS in the retention unit 113 of the paper making frame body 110 is an important element, and this retention action varies significantly depending on the water volume (retention water amount) of the pulp suspension PS in the retention unit 113. Accordingly, it is extremely important to stabilize the water amount or the water level H of this pulp suspension PS.

In this pulp feeding unit 15, since the overflow gates 302, 302 are provided, the water level H of the pulp suspension PS in the retention unit 113 is stably maintained at a specified value.

Moreover, since the overflow gates 302 are provided at both side walls 304, 304 of the retention unit 113 at the leading end position of the main body frame 112, that is, closely to the mesh belt 105 for making paper by filtering the pulp suspension PS, the water volume of the pulp suspension PS, that is, the water level H can be maintained stably, and hence the weight of the wet paper RP₀ made on the mesh belt 105 can be always assured stably.

The collection route 303 is a passage for collecting the pulp suspension PS overflowing from the overflow gate 302, and communicates with the collection port 303a from the outside of the overflow gate 302 through the surrounding of the main body frame 112.

The pulp suspension PS overflowing from the overflow gate 302 flows down and is collected in this collection rute 303, and is further collected into the pulp supply tank 89 from the collection port 303a, and is re-used.

The flow passage 115 encourages a uniform dispersion of the pulp suspension PS supplied into the retention unit 113, and prevents disturbance of the pulp suspension PS, and is formed as a meandering flow passage, and is provided at the upstream side of the retention unit 113.

The flow passage 115 is specifically provided in a form curved and bent in a vertical direction between the supply port 115a and the retention unit 113 of the pulp suspension PS of the paper making frame body 110.

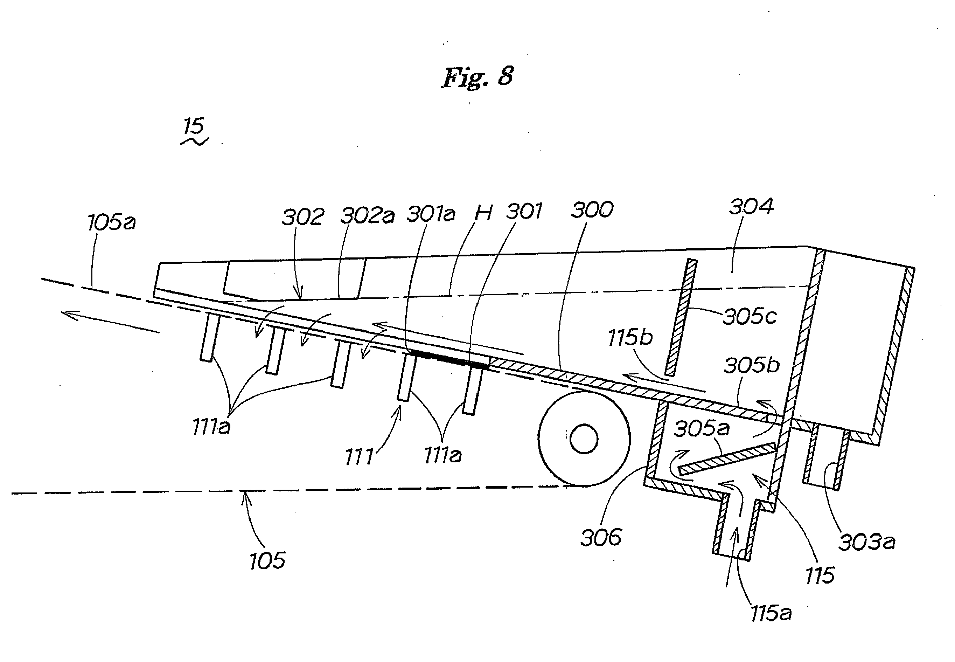

The flow passage 115 in the illustrated preferred embodiment is mainly formed of a plurality of partition plates 305, 305, ... provided in the main body frame 112, and more specifically the flow passage 115 is formed in bent and curved form, consisting of a partition plate 305a provided in the supply unit 306 of the main body frame 112, a rear part (partition plate) 305b of the flat plate member 300 for forming the bottom of the main body frame 112, and a partition plate 305c provided upright in the main body frame 112. The running direction of the flow passage 115 is formed in an upward direction from its inlet, that is, the supply port 115a opened in the bottom of the supply unit 306, turning around the partition plate 305a, further turning around the partition plate 305b, and extending toward the outlet 115b opened at the lower side of the partition plate 305c (see arrow in Fig. 8). The supply port 115a can communicate with the pulp supply tank 89 for supplying the pulp suspension PS.

The upper edge of the partition plate 305c provided upright in the main body frame 112 is provided so as to be positioned at the water level of the pulp suspension PS flowing and stagnant on the flat plate member 116, that is, at a lower level than the water level H defined by the overflow gate 302.

The assembly structure of the partition plates 305a, 305b, 305c for forming the flow passage 115 and the main body frame 112 is not specified, and for example, the partition plates 305a, 305b, 305c may be formed independently, and connected and assembled integrally with the main body frame 112, or they may be formed integrally when made of injection molding plastic material or integral forming material.

The partition member 111 is composed of a plurality of framework members 111a, 111a, ..., having a louver structure capable of draining, and has a shape and size capable of sliding and supporting the entire width of the lower side of the mesh belt 105.

In this relation, at the leading end of the flat plate member 116 of the paper making frame body 110, as mentioned above, a thin guide sheet 301 is provided for assuring a smooth flow of the pulp suspension PS on the mesh belt 105, and the leading edge 88a of this guide sheet 88 is set at a position corresponding to the beams for composing the louver structure of the partition member 111,that is, one of the framework members 111a, 111a, ..., and is more specifically disposed slidably on the upper position of the mesh belt 105 supported by this beam 111a.

The action and effect of the flow passage structure of the pulp suspension PS in the pulp feeding unit 15 are estimated as follows.
(i) Meandering route of flow passage 115
   The flow passage 115 divided and formed by the partition plates 305 (305a, 305b, 305c) is meandering and long, and the pulp suspension PS passes through this flow passage 115, and is dispersed uniformly, and disturbance of the pulp suspension PS is prevented effectively.
(ii) Overflow gate 302
   By the presence of the overflow gates 302, 302, if the supply amount of the pulp suspension PS in the paper making frame body 110 varies, the water level H of the pulp suspension PS retained in the paper making frame body 110 is always maintained at a specific level, so that the weight (paper thickness) of the wet paper RP₀ made on the mesh belt 105 may be stabilized.
   That is, in the paper making process, in order to keep constant the weight (paper thickness), it is necessary to keep constant the supply amount of the pulp suspension PS onto the mesh belt 105. In the supply amount adjustment by the second suspension supply pump 90 mentioned above, since the pump rotation = supply amount of pulp suspension PS is not constant, the variation of the weight is significant.
   By contrast, when the water level H of the pulp suspension PS retained in the paper making frame body 110 is constant, the supply water volume of the pulp suspension PS is constant, and by noticing this phenomenon, the pulp suspension PS is allowed to overflow from the leading end of the paper making frame body 110, and the water level H of the pulp suspension PS retaining in the paper making frame body 110 is kept constant. As a result, if the discharge amount of the second suspension supply pump 90 varies, the water level is constant, and a stable weight is obtained. In addition, precise pump control is not necessary.
(iii) Thin guide sheet 301 at the leading edge of flat plate member 300
   Since the leading edge 301a of the guide sheet 301 is disposed slidably on the upper side position of the mesh belt 105 supported by the assembly member 111a for forming the louver structure of the partition member 111, uniform water filtering by the net of the mesh belt 105 is assured.

Between the assembly members 111a, 111a of the partition member 111, the pulp suspension PS tends to flow freely also in the direction of the driven roller 108 when being filtered through the paper making mesh structure of the mesh belt 105, and hence uniform water filtering by the mesh cells is difficult, and uneven water filtering may occur locally. When the water filtering is not uniform, the recycled paper RP may have longitudinal patterns.

By contrast, as in the illustrated preferred embodiment, since the leading edge 301a of the guide sheet 301 is set at the upper side position of the assembly member 111a for forming the louver structure of the partition member 111, such inconvenience can be avoided effectively.

The upstream side of the pulp feeding unit 15 is provided with the pulp supply tank 89 for supplying the pulp suspension PS to the pulp feeding unit 15.

The pulp suspension PS retained in the pulp supply tank 89 is supplied by the second suspension supply pump 90, and supplied into the flow passage 115 in the paper making frame body 110 from the supply port 115a, and passes slowly in this meandering flow passage 115 as indicated by arrow in Fig. 8, and flows into the retention unit 113 from the outlet 115b, and is retained to the water level H defined by the overflow gates 302, 302, and is uniformly dispersed and supplied on the upper side of the mesh belt 105 running being disposed upward and obliquely toward the running direction, by the cooperative action of this retention action and the running action of the mesh belt 105.

On the other hand, the pulp suspension PS flowing down and collected in the collection route 303 by overflowing from the overflow gate 302 is collected in the pulp supply tank 89 as mentioned above.

The pulp suspension PS uniformly dispersed on the upper side of the mesh belt 105 is conveyed together with the mesh belt 105, by the running action off the mesh belt 105 in the arrow direction, and is dewatered by the self-weight filtering action by the mesh of the mesh belt 105, and wet paper RP₀ (water content 90 to 85% in the illustrated preferred embodiment) is obtained.

The white paper W filtered and dewatered by the mesh belt 105 (the pulp water of an ultra-low concentration filtered by the paper making mesh in the paper making process) is collected in the white water collection tank 45 of the water feed device 27 as mentioned above.

The dewatering roll unit 96 composes a location for squeezing and dewatering the wet paper RP₀ on the mesh belt 105 at the linkage position of the paper making belt conveyor unit 95 mentioned above and the drying belt conveyor unit 97 described below.

More specifically, the smooth surface belt 145 described below of the drying belt conveyor unit 97 at the downstream side, and the mesh belt 105 of the paper making belt conveyor unit 95 at the upstream side are stacked up in upper and lower layers as shown in Fig. 1 and Fig. 5, and the upper and lower adjacent portions of the smooth surface belt 145 and the mesh belt 105 are the linkage location, and at this linkage location, the dewatering roll unit 96 rolls and squeezes the mesh belt 105 and the smooth surface belt 145 by squeezing from upper and lower sides, thereby dewatering.

The dewatering roll unit 96 includes at least a preliminary dewatering roll unit 96A, and a final dewatering roll unit 96B.

The illustrated dewatering roll unit 96 is, as specifically shown in Fig. 1, mainly composed of the preliminary dewatering roll unit 96A, the final dewatering roll unit 96B, and an angle defining roll unit 96C as auxiliary means.

The preliminary dewatering roll unit 96A is for squeezing and dewatering the wet paper RP₀ on the mesh belt 105 preliminarily, and more specifically it includes a preliminary squeezing roll pair 122 consisting of a preliminary dewatering roll 120 for rolling on the mesh belt 105 from the lower side, and a preliminary press roll 121 for rolling and pressing on the smooth surface belt 145 from the upper side in relation to this preliminary dewatering roll 120.

By the preliminary squeezing roll pair 122 consisting of the preliminary dewatering roll 120 and the preliminary press roll 121, the mesh belt 105 and the smooth surface belt 145 are rolled and squeezed in a pressed form by a specified preliminary pressure from the upper and lower sides, and the moisture contained in the wet paper RP₀ on the mesh belt 105 is preliminarily dewatered and removed.

In this case, the preliminary pressure, that is, the preliminary squeezing force of the preliminary dewatering roll unit 96A for preliminarily squeezing and dewatering the wet paper RP₀ on the mesh belt 105 is set in a range not to destroy the wet paper RP₀ having a large water content, and in the illustrated preferred embodiment, the preliminary squeezing force is set in a range so that the water content of the wet paper on the mesh belt 105 may be 80 to 75% after the preliminary dewatering process.

The final dewatering roll unit 96B is a location for finally squeezing and dewatering the wet paper RP₀ on the mesh belt 105 after preliminary dewatering in the preliminary dewatering roll unit 96A to obtain dried paper (recycled paper) RP of a specified water content, and more specifically includes at least one set of final squeezing roll pair 127 consisting of a final dewatering roll 125 for rolling on the mesh belt 105 from the lower side, and a final press roll 126 for rolling and pressing on the smooth surface belt 145 from the upper side in relation to this final dewatering roll 125.

By the final squeezing roll pair 127 consisting of the final dewatering roll 125 and the final press roll 126, the mesh belt 105 and the smooth surface belt 145 are rolled and squeezed in a pressed form by a specified final pressure from the upper and lower sides, and the moisture contained in the wet paper RP₀ on the mesh belt 105 is finally dewatered and removed, and a dried paper of specified water content, that is, a recycled paper RP is obtained.

In this case, the final pressure, that is, the final squeezing force of the final dewatering roll unit 96B for finally squeezing and dewatering the wet paper RP₀ on the mesh belt 105 is set to such a degree as to be capable of obtaining a specified dewatering effect securely on the preliminarily dewatered wet paper RP₀, and in the illustrated preferred embodiment, it is set in a range of water content of 70 to 85% in the dried paper (recycled paper) RP on the mesh belt 105 after final dewatering.

The rolls 120, 121, 125, 126 in the dewatering roll unit 96 are not specifically shown in the drawing, but are driven and coupled to a single drive motor 106 by means of driving and coupling means composed of a gearing mechanism, and all rolls 120, 121, 125, 126 are rotated and driven in mutual cooperation.

In this case, these rolls 120, 121, 125, 126 are rotated and controlled so that the outer circumference of the upper and lower rolls 120, 125, and the outer circumference of the rolls 121, 126 may mutually roll and contact with each other and a slight rotating speed difference each other, with respect to the contact surface of the mesh belt 105 and the smooth surface belt 145 (the lower side of the mesh belt 105 and the upper side of the smooth surface belt 145) being rolled and squeezed in a pressed state, between their outer circumferential surfaces .

More specifically, the rotating speed of the preliminary and final press rolls 121, 126 of the upper side is set slightly larger than the rotating speed of the preliminary and final press rolls 120,125 of the lower side, and hence the running speed of the smooth surface belt 145 is set lightly larger than the running speed of the mesh belt 105. In this constitution, as described below, when the wet paper RP₀ squeezed and dewatered by the dewatering roll 96 is transferred and moved to the lower side of the smooth surface belt 145 of the upper side from the upper side of the mesh belt 105 of the lower side, a tension is applied to the wet paper RP₀, and wrinkling of the wet paper RP₀ may be prevented effectively.

The angle defining roll unit (angle defining means) 96C is a location for assisting and validating the squeezing and dewatering action by the preliminary dewatering roll unit 96A and the final dewatering roll unit 96B, and it is provided at the upstream side of the preliminary dewatering roll unit 96A, and defines the inclination angle between the mesh belt 105 and the smooth surface belt 145 inserted in the preliminary dewatering roll unit 96A.

The angle defining roll unit 96C specifically defines the inclination angle between the mesh belt 105 and the smooth surface belt 145 inserted in the preliminary dewatering roll unit 96A, and more specifically it includes a mesh belt guide roll 130 for defining the insertion angle of the mesh belt 105 into the preliminary dewatering roll unit 96A by rolling on the mesh belt 105 from the lower side, and a smooth surface belt guide roll 131 for defining the insertion angle of the smooth surface belt 145 into the preliminary dewatering roll unit 96A by rolling on the smooth surface belt 145 from the upper side.

The insertion angle of the mesh belt 105 into the preliminary dewatering roll unit 96A is defined by the mesh belt guide roll 130, and the insertion angle of the smooth surface belt 145 into the preliminary dewatering roll unit 96A is defined by the smooth surface belt guide roll 131, and therefore the inclination angle between the mesh belt 105 and the smooth surface belt 145 is determined indirectly in a specified range.

The inclination angle between the mesh belt 105 and the smooth surface belt 145 is set so as to prevent the wet paper RP₀ from becoming slurry again by the preliminary dewatering action by the preliminary dewatering roll unit 96A, as the moisture contained in the wet paper RP₀ is massively squeezed out to the upstream side of the preliminary dewatering roll unit 96A, and the large amount of water thus squeezed is absorbed again in the wet paper RP₀.

In other words, by the preliminary dewatering roll 120 and the preliminary press roll 121 of the preliminary dewatering roll unit 96A, when the mesh belt 105 mounting the wet paper RP₀ on the upper side and the smooth surface belt 145 are rolled and squeezed in a pressed state from the upper and lower sides, the moisture contained in the wet paper RP₀ is squeezed out to the upstream side of the both rolls 120, 121.

In this case, if the inclination angle α formed between the mesh belt 105 and the smooth surface belt 145 is large, at a position near the upstream side of the both rolls 120, 121, the smooth surface belt 145 of the upper side is departed from the wet paper RP₀ on the mesh belt 105 at the lower side, and a part of the massive squeezed moisture contained in the wet paper RP₀ is absorbed again in the wet paper RP₀ and the wet paper RP₀ may become slurry again.

By contrast, when the inclination angle α formed between the mesh belt 105 and the smooth surface belt 145 is small, at a position near the upstream side of the both rolls 120, 121, the smooth surface belt 145 of the upper side is pressed to the wet paper RP₀ on the mesh belt 105 at the lower side, and all of the massive squeezed moisture contained in the wet paper RP₀ falls down through the mesh belt 105, and is not absorbed again in the wet paper RP₀ and the wet paper RP₀ may be prevented from becoming slurry again.

The inclination angle α formed between the mesh belt 105 and the smooth surface belt 145 is preferably set at 1 to 20 degrees as a result of experiments, and more preferably set at 3 to 7 degrees, and it is set at 5 degrees in the illustrated preferred embodiment.

Thus, by driving of the drive motor 106, the rolls 120, 121, 125, 126 of the preliminary dewatering roll unit 96A and the final dewatering roll unit 96B in the dewatering roll unit 96 are put in rotation, and first by the preliminary squeezing roll pair 122 in the preliminary dewatering roll unit 96A, the mesh belt 105 and the smooth surface belt 145 are rolled and squeezed in a pressed state from both upper and lower sides with a specified preliminary pressure, and the moisture contained in the wet paper RP₀ on the mesh belt 105 is preliminarily dewatered and removed (in the illustrated preferred embodiment, the water content of the wet paper RP₀ is reduced from 90 to 85% to 80 to 75%).

In succession, by the final squeezing roll pair 127 in the final dewatering roll unit 96B, the mesh belt 105 and the smooth surface belt 145 are rolled and squeezed in a pressed state from both upper and lower sides with a specified final pressure, and the moisture contained in the wet paper RP₀ on the mesh belt 105 is finally dewatered and removed, and dry paper of specified water content, that is, recycled paper RP is obtained (in the illustrated preferred embodiment, the water content of the wet paper RP₀ is reduced from 80 to 75% to 70 to 65%). In this series of processes, the white water W squeezed and dewatered from the wet paper RP₀ is collected in the white water collection tank 45 of the water feed unit 27.

The wet paper RP₀ squeezed and dewatered in the dewatering roll unit 96 is transferred and conveyed to the lower side of the smooth surface belt 145 at the upper side from the upper side of the mesh belt 105 of the lower side at the downstream side location of the dewatering roll unit 96, and is conveyed together with the smooth surface belt 145, and the drying process by the drying belt conveyor unit 97 is executed.

This transfer action is considered to be caused by the smooth surface structure of the smooth surface belt 145. That is, the surface of the mesh belt 105 at the lower side is a fine undulated surface forming multiple fine continuous pores, while the surface of the smooth surface belt 145 at the upper side is a smooth surface without pores, and the wet paper RP₀ containing a slight moisture seems to be attracted by the surface tension against the surface of the smooth surface belt 145.

The drying belt conveyor unit 97 is a location for obtaining recycled paper RP by further heating and drying the dried paper RP squeezed and dewatered in the dewatering roll unit 96 after the paper making process in the paper making belt conveyor unit 95, and mainly includes a drying conveyor 170, a heating and drying unit 171, and the recycled paper smoothing unit (recycled paper smoothing device, recycled paper smoothing means) 10 mentioned above.

The drying conveyor 170 smoothes and conveys the wet paper RP₀ squeezed and dewatered in the dewatering roll unit 96, and mainly includes the smooth surface belt 145, and the drive motor 106 for driving the smooth surface belt 145.

The smooth surface belt 145 is for conveying the wet paper RP₀ while heating and drying, and specifically it is an endless belt of plate materials of smooth surface structure having a specified width connected and formed like a ring of a specified length. The plate material of the smooth surface structure is any material capable of finishing the one side surface of the wet paper RP₀ to a proper smoothness, and withstanding the heating action by the heating and drying unit 171 described below, and preferably fluoroplastic, stainless steel, or other flexible heat-resistant material may be used, and a fluoroplastic belt is used in the illustrated preferred embodiment.

This smooth surface belt 145 is, as shown in Fig. 1 and Fig. 5, rotatably suspended and supported by way of a drive roller 176, a driven roller 177, the dewatering roll unit 96, and a driven roller 178, and is driven and coupled to the drive motor 106 by way of the drive roller 176.

The drive motor 106 for driving the smooth surface belt 145, as described above, is used commonly as the driving source of the paper making net conveyor 100 and the dewatering roll unit 96.

The heating and drying unit 171 is a location for heating and drying the wet paper RP₀ transferred, rolled and conveyed on the smooth surface belt 145 from the mesh belt 105 of the paper making net conveyor 100, and specifically the smooth surface belt 145 for conveying and supporting the lower side of the wet paper RP₀ is heated from the lower side by a heater 180 disposed in an intermediate position of the running route thereof.

This heater 180 is a heater plate sliding and contacting with the opposite side of the conveying and supporting side of the wet paper RP₀ on the smooth surface belt 145, and is provided in a horizontal direction running portion in the running route of the smooth surface belt 145, and is provided in slide and contact with the opposite side of the upper side of the holding side of the wet paper RP₀ in the smooth surface belt 145, that is, at the lower side. As a result, the wet paper RP₀ on the smooth surface belt 145 is heated indirectly and dried by the smooth surface belt 145 heated by the heater plate 180.

The specific structure of the heater 180 in the illustrated preferred embodiment is shown in Fig. 5, and it is designed to function also as the recycled paper smoothing unit 10.

That is, the recycled paper smoothing unit 10 of the present preferred embodiment mainly includes the smooth surface belt 145, and a belt guide unit (belt guide means) 200 for sliding and supporting this smooth surface belt 145 from the lower side, and guiding the smooth surface belt 145 in a running state being curved upward toward the running direction, and the belt guide unit 200 is provided with the heater 180.

More specifically, the belt guide unit 200 is a plate material curved upward toward the running direction of the smooth surface belt 145, and having a horizontal and straight contour in the width direction, and this component material has a sufficient strength and wear resistance for sliding and supporting the smooth surface belt 145 from the lower side, and in particular a material excellent in heat transfer property is preferred as a base material for the heater plate.

The belt guide unit 200 in the illustrated preferred embodiment is made of a stainless steel plate (SUS), and is mounted and supported on the apparatus machine body 54 by means of support base plates 201, 201, and its upper surface is the curved guide surface 200a. Although not shown specifically in the drawing, the lower side 200b of the belt guide unit 200 is integrally provided with a flat heater of a thin plate, and it is formed as a heater plate of the heater 180.

On the curved guide surface 200a of the belt guide unit 200 having such configuration, the smooth surface belt 145 is slidably disposed with a specified tension. As a result, the smooth surface belt145 is guided slidably on the curved guide surface 200a of the belt guide unit 200 so as to run in an upward curved state (see Fig. 5).

The recycled paper smoothing unit 10 of the present preferred embodiment has a pressing unit 250 for pressing the entire wet paper RP₀ conveyed on the smooth surface belt 145 with a uniform pressure from the upper side, in addition to the configuration described above.

This pressing unit 250 is composed in a form of a covering belt conveyor specifically as shown in Fig. 5.

The covering belt conveyor 250 includes a covering belt 251 disposed and composed to run in a same horizontal direction in a state overlaid with the smooth surface belt 145, and the drive motor 106 for driving this covering belt 251. This drive motor 106 is used commonly as the drive source of the paper making net conveyor 100 and the dewatering roll unit 96 as explained in preferred embodiment 1.

The covering belt 251 is an endless belt running while covering the entire wet paper RP₀ on the smooth surface belt 145 while tightly holding together with the smooth surface belt 145, and its lower side, that is, the side covering the entire wet paper RP₀ together with the smooth surface belt 145 cooperates with the upper side of the smooth surface belt 145, and a flat smoothing action surface is formed for smoothing the entire wet paper RP₀. The covering range of the wet paper RP₀ (recycled paper RP) by the covering belt 251 is set in a range nearly opposite to the belt guide unit 200 (that is, the heater plate 180) in the running route of the smooth surface belt 145.

The covering belt 251 is specifically a mesh belt, and has a ventilation mesh structure composed of numerous mesh cells for passing and releasing the steam heated and evaporated from the wet paper RP₀.

The plate material of the ventilation mesh structure for composing the mesh belt 251 is a material capable of passing and releasing the moisture heated and evaporated from the wet paper RP₀ on the smooth surface belt 145 smoothly to the upper side from the numerous mesh cells, and preferably, same as in the mesh belt 105 of the paper making unit 4 mentioned above, desired examples are polypropylene (PP), polyethylene terephthalate (PET), polyamide (PA) (generally known as Nylon, a registered trademark), stainless steel (SUS), and other corrosion resistant materials, and in the illustrated preferred embodiment, a PET mesh belt 251 excellent in heat resistance is used.

The ventilation mesh structure of the mesh belt 251 is preferred to be fine in mesh size, and fine and smooth in weaving, and same as the mesh belt 105 of the paper making unit 4 described above, a specific material is selected in consideration of the characteristic of the desired paper.

As far as the mesh belt 251 satisfies the requirements of heat resistance of withstanding high heat in the heating and drying process, and the ventilation for passing the steam heated and evaporated from the wet paper RP₀, strict design conditions as required in the mesh belt 105 forming the core of the paper making unit 4 are not needed, but the mesh belt 251 in the illustrated preferred embodiment is a plain-woven PET-made mesh belt of 25 mesh cells.

The width dimension of the mesh belt 251 is set same as the width dimension of the smooth surface belt 145 as shown in Fig. 5 so as to overlap with the smooth surface belt 145 and hold the wet paper RP₀ in a sandwich state.

The mesh belt 251 is rotatably suspended and supported by way of a drive roller 255, and a driven roller 256, and the drive roller 255 is driven and coupled to the drive motor 106.

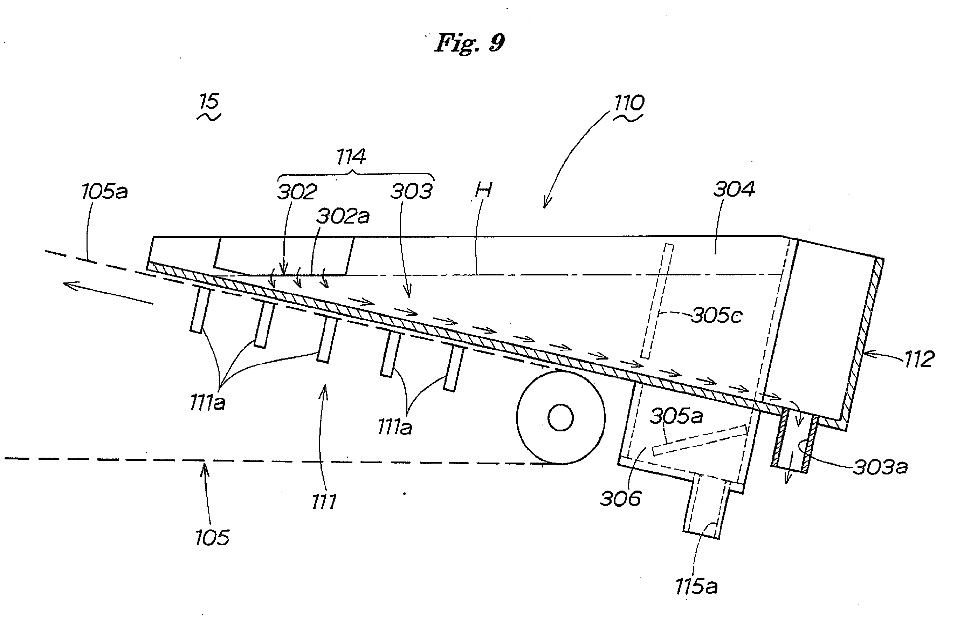

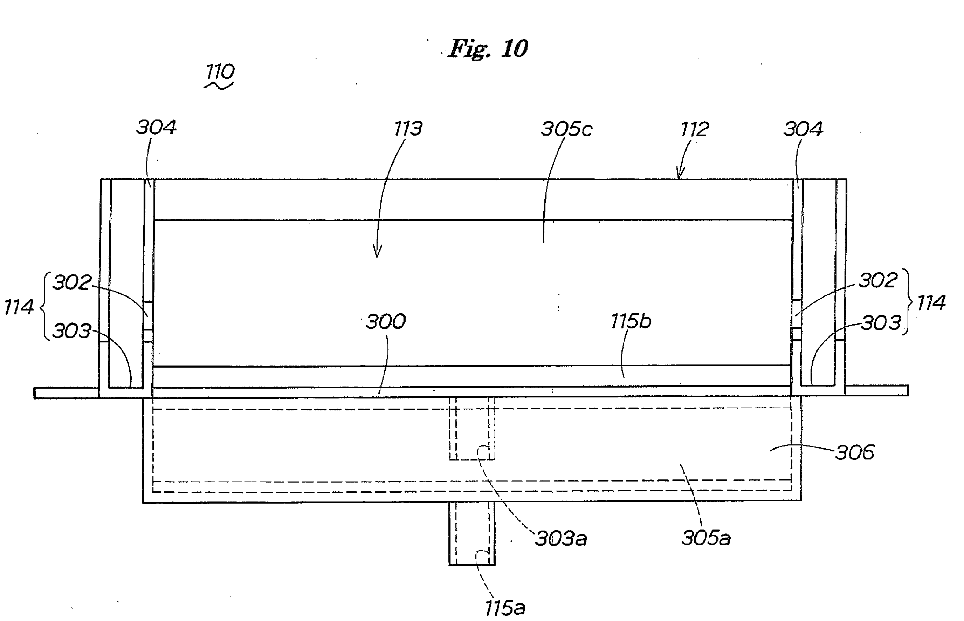

The mesh belt 251 is slidably disposed on a curved guide surface 200a of a belt guide unit 200 with a specified tension by way of the smooth surface belt 145. As a result, in a state overlaid with the smooth surface belt 145, the mesh belt 251 is guided slidably in a same direction on the curved guide surface 200a of the belt guide unit 200, and runs in an upward curved state (see Fig. 9 and Fig. 10 (a)).

By such disposition and configuration of the mesh belt 251, the mesh belt 251 pressed the wet paper RP₀ on the smooth surface belt 145 with a uniform pressure in the overall length of the covering range, and without causing warp or wrinkle in the wet paper RP₀ (recycled paper RP), the one-side surface of the wet paper RP₀ (recycled paper RP) contacting with the surface of the smooth surface belt 145 and the opposite-side surface are finished to an appropriate smooth surface.

After the wet paper RP₀ squeezed and dewatered by the dewatering roll unit 96 is transferred and roll on the lower side of the smooth surface belt 145 at the upper side from the upper side of the mesh belt 105 of the lower side, the smooth surface belt 145 is inverted to run by way of the rollers 178, 176, and the wet paper RP₀ on the smooth surface belt 145 conveyed from the smooth surface belt 145 is provided with a uniform tension in the conveying and running direction by means of the running action of the smooth surface belt 145, and the curved shape of the smooth surface belt 145 by the belt guide unit 200 (180), and by the pressing force by covering with the mesh belt 251 of the covering belt conveyor 250 from the upper side, the wet paper is heated and dried while being held in a sandwich state by uniform pressures from the upper and lower side. As a result, the wrinkle and the warp of the wet paper RP₀ caused in the proceeding process of paper making process are effectively eliminated, and occurrence of wrinkle or warp of the wet paper by the heating and drying process by the heater plate 180 can be effectively prevented, and the entire wet paper RP₀ is uniformly dried by an appropriate ventilation of the mesh belt 251 of the upper side, so that the wet paper RP₀ is regenerated into a smooth recycled paper (dry paper) RP on the whole.

In other words, the wet paper RP₀ (recycled paper RP) is heated and dried while being held in a flat state, by the cooperative action of the sandwich structure of a specified pressure by the smooth surface belt 145 and the covering belt 251, together with the uniform tension applied in the conveying and running direction, and the wrinkle and warp caused on the wet paper RP₀ in the proceeding process of paper making process is effectively lost and removed, and occurrence of wrinkle and warp of the wet paper RP₀ (recycled paper RP) by the heating and drying action by the heater plate 180 can be effective prevented further, and therefore in the very narrow used paper processing space of a furniture size, a smooth recycled paper RP free from wrinkle can be regenerated securely.

Moreover, the covering belt 251 of the covering belt conveyor 250 is formed of a mesh belt composed of numerous mesh cells capable of passing and releasing the steam heated and evaporated fro the wet paper RP₀ on the smooth surface belt 145 to the upper side, in spite of the presence of the covering belt 251, the steam generated by heating of the wet paper RP₀ can be effectively elevated and dissipated, and the drying process is smoothly promoted.

At the downstream side of the heating and drying unit 171 on the smooth surface belt 145, a stripping member 210 is provided, and the dry paper or the recycled paper RP (water content 10 to 7%) being dried and conveyed on the smooth surface belt 145 is sequentially stripped off from the holding side of the smooth surface belt 145.

In this relation, at the running route terminal end position of the smooth surface belt 145 at the downstream side of the stripping member 210, a fixed size cutter unit 211 is provided, and the recycled paper RP stripped from the smooth surface belt 145 is cut to a specified size (in the illustrated preferred embodiment, an A4 size format), and is discharged from the outlet port 8 of the apparatus case 6.

The device control unit 5 is to control the driving parts of the pulp making unit 2, the pulp concentration adjustment unit 3, and the paper making unit 4 automatically by mutual cooperation, and is specifically composed of a microcomputer having CPU, ROM, RAM, and I/O port.

This device control unit 5 stores programs for executing the pulp making process of the pulp making unit 2, the concentration adjustment process of the concentration adjustment unit 3, and the paper making process of the paper making unit 4 by mutual cooperation, and various items of information necessary for driving of the component units 2 (20, 21), 3 (3A, 3B), and 4 (95, 96, 97) are preliminarily entered as data through keyboard or other input means appropriately, including, for example, the driving time and rotating speed of the agitating device 26 in the macerating unit 20, the water feed timing and the water feed amount of the water feed device 27, the driving time and the agitation amount of the circulation pump 69 in the beating unit 21, the driving time and the rotating speed of the grinder 50, the adjustment timing and the beating gap G adjustment amount of the gap adjusting means 57, the running speed of the conveyors 100, 170 in the paper making unit 4, the driving time of the heating and drying unit 171, and the operation timing of the fixed size cutter unit 211.

The device control unit 5 electrically connected with the weight sensors 48, 87, and the drive units 35, 41, 56, 61, 66, and 106 as mentioned above, and the drive control unit 5 controls these drive units 35, 41, 56, 61, 66, and 106, according to these measured values and control data.

The used paper recycling apparatus 1 having such configuration is started when the power source is turned on, and the component units 2 (20, 21), 3 (3A, 3B), and 4 (95, 96, 97) are controlled automatically by mutual cooperation, and the used paper UP, UP, ... charged into the inlet port 7 of the apparatus case 6 are macerated and beaten by the macerating unit 20 and the beating unit 21 of the pulp making unit 2, and the used paper pulp UPP is manufactured, and the pulp suspension PS of paper making concentration is prepared in the pulp concentration adjustment unit 3, and this pulp suspension PS is manufactured in the paper making belt conveyor unit 95 of the paper making unit 4, the dewatering roll unit 96, and the drying belt conveyor unit 97, and is regenerated as recycled paper RP, and is discharged onto the recycled paper receiving tray 9 from the outlet port 8 of the apparatus case 6.

In the used paper recycling apparatus 1 having such configuration, the pulp feeding unit (pulp feeder) 15 of the paper making unit 4 is disposed slidably on the upper side 105a of the mesh belt 105a running in the paper making belt conveyor unit (paper making process unit) 95, and includes the retention unit 113 for retaining a slurry-like pulp suspension PS mixing the water W and used paper pulp UPP sent from the pulp manufacturing unit 2, and the paper making frame body 110 for defining the supply width L of the pulp suspension PS on the upper side of the mesh belt 105, in which the leading end position of this paper making frame body 110 is provided with the overflow unit 114 for keeping constant the water level H of the pulp suspension PS retained in the retention unit 113, and the pulp suspension PS supplied in the paper making frame body 110 is retained in the retention unit 113 to the water level H defined the overflow unit 114, and is uniformly dispersed and supplied on the upper side of the mesh belt 105 by cooperative action of this retention action and the running action of the mesh belt 105, and therefore if the supply amount of the pulp suspension PS sent into the paper making frame body 110 varies, the water level H of the pulp suspension PS retained in the paper making frame body 110 is always kept constant, and the weight of the used paper RP₀ made on the mesh belt 105 is stable, so that recycled paper RP of uniform texture will be obtained.

The foregoing preferred embodiment may be modified and changed in design as described below.

For example, the specific configuration of the pulp feeding unit (pulp feeder) 15 of the present invention is not limited to the illustrated preferred embodiments alone, but other configurations having similar functions may be employed.

For example, in the used paper recycling apparatus in the illustrated preferred embodiments, the grinder 50 for composing the beating unit 21 of the pulp making unit 2 is used for pressurizing and beating the used paper by the beating action surfaces 51a, 52a, and for grinding and pulverizing the inks forming the characters and patterns on the used paper, and by using only the tap water such as drinking water obtained from the general water services, the configuration requires no paper making chemicals such as used paper de-inking chemicals conventionally essential in large-scale used paper recycling equipment in the paper making plant or used paper recycling plant, and moreover the present invention is applicable, as a matter of course, not only in the used paper recycling apparatus capable of realizing used paper recycling by ordinary water alone, but also in the used paper recycling apparatus using paper making chemicals such as used paper de-inking chemicals.

The present preferred embodiment is illustrative and not restrictive, the scope of the present invention being defined by the appended claims.

## Claims

1. A used paper recycling apparatus (1) of furniture size to be installed at the site of origin of used paper, said apparatus comprising a pulp manufacturing unit (2) and a paper making device (4) for manufacturing recycled paper from used paper pulp manufactured in the pulp manufacturing unit, the paper making device comprising a running endless mesh belt (105) and a pulp feeder (15), the pulp feeder comprising:
a paper making frame body (110) disposed slidably on the upper side (115a) of the running endless mesh belt, said paper making frame body having a retention unit (113) for retaining a slurry-like pulp suspension sent from the pulp manufacturing unit, said retention unit having side walls (304) defining the supply width (L) of the pulp suspension on the upper side of the endless mesh belt, said paper making frame body further comprising overflow means (114) for keeping constant the water level of the pulp suspension retained in the retention unit, the pulp suspension supplied in the paper making frame body being retained in the retention unit to the water level defined by the overflow means and being uniformly dispersed and supplied on the upper side of the endless mesh belt by cooperative action of this retention action and the running action of the endless mesh belt,
**characterized in that** an overflow means (114) is provided at both side walls of the retention unit at the leading end position of the paper making frame body, said overflow means including an overflow gate (302) for overflowing the pulp suspension when the water level (H) of the pulp suspension retained in the retention unit exceeds a specific level, and said overflow means further including a collection route (303) passing to a collection port (303a) by way of the periphery of the paper making frame body from the outside of the overflow gate.

2. The apparatus according to claim 1, wherein the distance (L) between the side walls of the retention unit is set at the width dimension of the recycled paper to be manufactured.

3. The apparatus according to claim 1, wherein the upper edge (302a) of the overflow gate is set to be horizontal and straight.

4. The apparatus according to claim 1, wherein the bottom of the paper making frame body is provided with a flat plate member (300) for covering the mesh of the mesh belt in a closed state from the upper side, and the bottom of the retention unit is formed by this flat plate member and the running endless mesh belt.

5. The apparatus according to claim 4, wherein the leading end edge of the flat plate member of the paper making frame body is provided with a thin guide sheet (301) for assuring a smooth flow of the pulp suspension on the mesh belt.

6. The apparatus according to claim 1, wherein at the upstream side of the retention unit in the paper making frame body there is provided a meandering flow passage (115) for promoting uniform dispersion of the supplied pulp suspension and preventing disturbance of the pulp suspension.

7. The apparatus according to claim 6, wherein the meandering flow passage is provided in a zigzag form in a vertical direction between a pulp suspension supply port (115a) of the paper making frame body and the retention unit.

8. The apparatus according to claim 1, wherein at the lower side of the running endless mesh belt there is provided with a partition plate member (111) having a louver structure for slidably supporting the lower side of the endless mesh belt.

9. The apparatus according to claim 8, wherein the endless mesh belt runs obliquely upward between the paper making frame body and the partition plate member.

10. The apparatus according to any of claims 1 to 9, further comprising a control unit (5) for driving and controlling the pulp manufacturing unit and the paper making device.

## Patentansprüche

1. Vorrichtung (1) zum Recycling von Altpapier in Möbelgröße, die an der Ursprungsstelle des Altpapiers installiert werden soll, wobei die Vorrichtung eine Anlage (2) zur Herstellung der Papiermasse und eine Papierherstellungsvorrichtung (4) für die Herstellung von recyceltem Papier aus der Altpapiermasse aufweist, die in der Anlage zur Herstellung der Papiermasse hergestellt wird, wobei die Papierherstellungsvorrichtung ein laufendes Endlossiebband (105) und eine Papiermassezuführvorrichtung (15) aufweist, wobei die Papiermassezuführvorrichtung aufweist: ein Papierherstellungsgehäuse (110), das verschiebbar auf der oberen Seite (115a) des laufenden Endlossiebbandes angeordnet ist, wobei das Papierherstellungsgehäuse eine Rückhalteanlage (113) für das Zurückhalten einer schlämmeartigen Papiermassesuspension aufweist, die von der Anlage zur Herstellung der Papiermasse kommt, wobei die Rückhalteanlage Seitenwände (304) aufweist, die die Zuführbreite (L) der Papiermassesuspension auf der oberen Seite des Endlossiebbandes definieren, wobei das Papierherstellungsgehäuse außerdem ein Überlaufmittel (114) dafür aufweist, dass der Wasserpegel der Papiermassesuspension, die in der Rückhalteanlage zurückgehalten wird, konstant bleibt, wobei die in das Papierherstellungsgehäuse zugeführte Papiermassesuspension in der Rückhalteanlage auf einem Wasserpegel gehalten wird, der durch das Überlaufmittel definiert wird, und wobei sie gleichmäßig dispergiert und auf die obere Seite des Endlossiebbandes durch ein Zusammenwirken dieses Rückhaltevorganges und der Lauffunktion des Endlossiebbandes zugeführt wird,
**dadurch gekennzeichnet, dass** ein Überlaufmittel (114) an beiden Seitenwänden der Rückhalteanlage in der vorderen Endposition des Papierherstellungsgehäuses vorhanden ist, wobei das Überlaufmittel ein Überlauftor (302) für das Überlaufen der Papiermassesuspension umfasst, wenn der Wasserpegel (H) der in der Rückhalteanlage zurückgehaltenen Papiermassesuspension einen spezifischen Pegel übersteigt, und wobei das Überlaufmittel außerdem einen Sammelweg (303) umfasst, der zu einer Sammelöffnung (303a) über den Umfang des Papierherstellungsgehäuses von außerhalb des Überlauftors führt.

2. Vorrichtung nach Anspruch 1, bei der der Abstand (L) zwischen den Seitenwänden der Rückhalteanlage auf die Breitenabmessung des recycelten Papiers eingestellt wird, das hergestellt werden soll.

3. Vorrichtung nach Anspruch 1, bei der der obere Rand (302a) des Überlauftors so eingestellt wird, dass er horizontal und geradlinig ist.

4. Vorrichtung nach Anspruch 1, bei der der Boden des Papierherstellungsgehäuses mit einem flachen Plattenelement (300) für das Bedecken der Maschen des Siebbandes in einem geschlossenen Zustand von der oberen Seite vorhanden ist, und wobei der Boden der Rückhalteanlage durch dieses flache Plattenelement und das laufende Endlossiebband gebildet wird.

5. Vorrichtung nach Anspruch 4, bei der die vordere Endkante des flachen Plattenelementes des Papierherstellungsgehäuses mit einer dünnen Führungsschicht (301) für das Sichern eines gleichmäßigen Flusses der Papiermassesuspension auf das Siebband versehen ist.

6. Vorrichtung nach Anspruch 1, bei der auf der stromaufwärts gelegenen Seite der Rückhalteanlage im Papierherstellungsgehäuse ein sich windender Strömungsdurchgang (115) für das Begünstigen einer gleichmäßigen Dispersion der zugeführten Papiermassesuspension und für das Verhindern einer Störung der Papiermassesuspension vorhanden ist.

7. Vorrichtung nach Anspruch 6, bei der der sich windende Strömungsdurchgang in einer Zickzackform in einer vertikalen Richtung zwischen der Zuführöffnung (115a) für die Papiermassesuspension des Papierherstellungsgehäuses und der Rückhalteanlage vorhanden ist.

8. Vorrichtung nach Anspruch 1, bei der auf der unteren Seite des laufenden Endlossiebbandes ein Trennplattenelement (111) vorhanden ist, das eine Lamellenstruktur für das verschiebbare Tragen der unteren Seite des Endlossiebbandes aufweist.

9. Vorrichtung nach Anspruch 8, bei der das Endlossiebband schräg nach oben zwischen dem Papierherstellungsgehäuse und dem Trennplattenelement verläuft.

10. Vorrichtung nach einem der Ansprüche 1 bis 9, die außerdem eine Steuereinheit (5) für das Antreiben und Steuern der Anlage zur Herstellung der Papiermasse und der Papierherstellungsvorrichtung aufweist.

## Revendications

1. Appareil de recyclage de papier usagé (1) ayant la taille d'un meuble, destiné à être installé sur le site de l'origine du papier usagé, ledit appareil comprenant une unité de fabrication de pâte (2) et un dispositif de fabrication de papier (4) pour fabriquer du papier recyclé à partir de la pâte de papier usagé fabriqué dans l'unité de fabrication de pâte, le dispositif de fabrication de papier comprenant une courroie à mailles sans fin à déplacement (105) et un dispositif d'alimentation de la pâte (15), le dispositif d'alimentation de la pâte comprenant : un corps de cadre de fabrication de papier (110), agencé de manière coulissante sur le côté supérieur (115a) de la courroie à mailles sans fin à déplacement, ledit corps de cadre de fabrication de papier comportant une unité de retenue (113) pour retenir une pâte de type suspension transférée par l'unité de fabrication de pâte, ladite unité de retenue comportant des parois latérales (304) définissant la largeur d'alimentation (L) de la suspension de pâte sur le côté supérieur de la courroie à mailles sans fin, ledit corps de cadre de fabrication de papier comprenant en outre un moyen de débordement (114) pour maintenir constant le niveau d'eau de la suspension de pâte retenue dans l'unité de retenue, la suspension de pâte amenée dans le corps de cadre de fabrication de papier étant retenue dans l'unité de retenue au niveau d'eau défini par le moyen de débordement et étant dispersée de manière uniforme et amenée sur le côté supérieur de la courroie à mailles sans fin par l'intermédiaire d'une action de coopération de cette action de retenue et de l'action de déplacement de la courroie à mailles sans fin ;
**caractérisé en ce qu'**un moyen de débordement (114) est agencé au niveau des deux parois latérales de l'unité de retenue, au niveau de la position d'extrémité avant du corps de cadre de fabrication de papier, ledit moyen de débordement englobant une porte de débordement (302) pour faire déborder la suspension de pâte lorsque le niveau de l'eau (H) de la suspension de pâte retenue dans l'unité de retenue dépasse un niveau spécifique, ledit moyen de débordement englobant en outre une route de collecte (303) passant vers un orifice de collecte (303a) à travers la périphérie du corps de cadre de fabrication de papier, à partir de l'extérieur de la porte de débordement.

2. Appareil selon la revendication 1, dans lequel la distance (L) entre les parois latérales de l'unité de retenue est ajustée en fonction de la dimension de la largeur du papier recyclé devant être fabriqué.

3. Appareil selon la revendication 1, dans lequel le bord supérieur (302a) de la porte de débordement est ajusté de sorte à être horizontal et droit.

4. Appareil selon la revendication 1, dans lequel la partie inférieure du corps de cadre de fabrication de papier comporte un élément de plaque plat (300) pour recouvrir les mailles de la courroie à mailles dans un état fermé à partir du côté supérieur, la partie inférieure de l'unité de retenue étant formée par cet élément de plaque plat et la courroie à mailles sans fin à déplacement.

5. Appareil selon la revendication 4, dans lequel le bord d'extrémité avant de l'élément de plaque plat du corps de cadre de fabrication de papier comporte une fine feuille de guidage (301) pour assurer un écoulement lisse de la suspension de pâte sur la courroie à mailles.

6. Appareil selon la revendication 1, dans lequel le côté amont de l'unité de retenue dans le corps de cadre de fabrication de papier comporte un passage d'écoulement sinueux (115) pour faciliter une dispersion uniforme de la suspension de pâte amenée et pour empêcher une perturbation de la suspension de pâte.

7. Appareil selon la revendication 6, dans lequel le passage d'écoulement sinueux est agencé en zigzag dans une direction verticale entre un orifice d'alimentation de la suspension de pâte (115a) du corps de cadre de fabrication de papier et l'unité de retenue.

8. Appareil selon la revendication 1, dans lequel un élément de plaque de séparation (111) ayant une structure de volet, pour supporter de manière coulissante le côté inférieur de la courroie à mailles sans fin, est agencé sur le côté inférieur de la courroie à mailles sans fin à déplacement.

9. Appareil selon la revendication 8, dans lequel la courroie à mailles sans fin se déplace de manière oblique vers le haut entre le corps de cadre de fabrication de papier et l'élément de plaque de séparation.

10. Appareil selon l'une quelconque des revendications 1 à 9, comprenant en outre une unité de commande (5) pour entraîner et contrôler l'unité de fabrication de pâte et le dispositif de fabrication de papier.
